# EUROPEAN PATENT APPLICATION

(11) **EP 4 187 463 A1**
(43) Date of publication of application: **31.05.2023**
(21) Application number: 22208995.5
(22) Date of filing: 23.11.2022
(51) Int. Cl.: G06Q 10/10, G10L 15/26, H04L 12/18

(54) **AN ARTIFICIAL INTELLIGENCE POWERED DIGITAL MEETING ASSISTANT**

(30) Priority: 24.11.2021 US 202163283173 P
(71) Applicant: Smartek21 Product Holdings Co., Kirkland, WA 98034 (US)
(72) Inventor: WELLS, Andrew Alan, Kirkland, 98034 (US); PANDEY, Abhinav, Kirkland, 98034 (US); KUMAR, Himanshu, Kirkland, 98034 (US); NAIR, Rishi, Kirkland, 98034 (US); JAIN, Rishav, Kirkland, 98034 (US); LALJI, Alkarim "Al", Kirkland, 98034 (US)
(74) Representative: Murgitroyd & Company

(57) **Abstract**

A computer-implemented system (10) and method (30) for providing an artificial intelligence powered digital meeting assistant is provided. A recording (25) of conversational data from a meeting facilitated via an internet-based communication platform is obtained (31). The conversational data from the recording (25) is transcribed (32) and a summary of the meeting is generated (33) based on the conversational data. A list of action items to be performed by one or more participants of the meeting is generated (34) based on the conversational data. The summary and the list of action items are provided (35) to the participants.

## Description

### FIELD

The invention relates in general to artificial intelligence and, in particular, to a computer-implemented system and method for providing an artificial intelligence powered digital meeting assistant.

### BACKGROUND

As Covid-19 spread across the globe, in-person contact was discouraged and in some jurisdictions, was prohibited outside of the household. Communication between people was forced to occur via other means, including online or via text and email. Even as concerns about the spread of Covid-19 lessen, with more and more of the population getting vaccinated, many meetings are still held online via an internet-based communication platform. Important information, tasks, assignments, and other data are communicated via such platforms during meetings.

Currently, some of the internet-based communication platforms, such as Zoom and Microsoft Teams, allow a user to record the meeting. Users can later listen to or watch the meeting to obtain any missed detail. However, if reviewing a particular part of the meeting is desired, a user must either watch or listen to the full meeting or attempt to locate the correct portion of the meeting using fast-forward and rewind features, which is inconvenient and time consuming. Further, no analysis of topics discussed during the meeting is automatically performed. Instead, a user must generate a summary or independently analyze the subject matter.

Accordingly, a need exists for a meeting assistant to communicate with a communication platform to access and analyze data during meetings on the communication platform for generating meeting summaries and identifying action items discussed during the meeting. Preferably, the summary and action items are identified with high precision and recall. Additionally, the summary and action items can be used to populate task or project management software in an automated fashion.

### SUMMARY

A digital meeting assistant can be used to generate a summary and list of action items discussed in a meeting performed via an internet-based communication platform such as Zoom or Microsoft Teams. The summary and action items can be made available to or provided to a user, such as a participant and are helpful by providing meeting material directly to the user. Conversational data obtained during the meeting can also be assigned to participants as speakers of the conversational data.

An embodiment provides a computer-implemented system and method for providing an artificial intelligence powered digital meeting assistant. A recording of conversational data from a meeting facilitated via an internet-based communication platform is obtained. The conversational data from the recording is transcribed and a summary of the meeting is generated based on the conversational data. A list of action items to be performed by one or more participants of the meeting is generated based on the conversational data. The summary and the list of action items are provided to the participants.

Still other embodiments of the invention will become readily apparent to those skilled in the art from the following detailed description, wherein are embodiments of the invention by way of illustrating the best mode contemplated for carrying out the invention. As will be realized, the invention is capable of other and different embodiments and its several details are capable of modifications in various obvious respects, all without departing from the spirit and the scope of the invention. Accordingly, the drawings and detailed description are to be regarded as illustrative in nature and not as restrictive.

### BRIEF DESCRIPTION OF THE DRAWINGS

FIGURE 1 is a block diagram showing a system for providing an artificial intelligence powered digital meeting assistant, in accordance with one embodiment.
FIGURE 2 is a flow diagram showing a method for providing an artificial intelligence powered digital meeting assistant, in accordance with one embodiment.
FIGURE 3 is a flow diagram showing, by way of example, a method for generating a meeting summary.
FIGURE 4 is a flow diagram showing, by way of example, a method for generating a list of action items.

### BEST MODE FOR CARRYING OUT THE INVENTION

Covid-19 forced many businesses and organizations to adopt a work from home or hybrid work policy. Even as more of the world gets vaccinated, many organizations are still allowing employees or members to work remotely or in a hybrid fashion that includes both remote and inoffice work. Accordingly, numerous meetings are still being conducted through telephone calls or more popularly, via internet-based communication platforms.

Although many of the communication platforms offer recordings of the meetings, a recording must be rewatched to identify a missed portion of the meeting and attempts can be made to find a particular part of the meeting using the fast-forward and rewind features, both of which are inconvenient and time consuming. Summarizing meeting notes, distilling action items and task assignments, and finding salient points of discussion from a meeting transcription data using Advanced Machine Learning and NLP techniques can make reviewing a meeting via an internet-based communication platform simple and efficient, which in turn may lead to a higher percentage of completion of tasks assigned during the meeting.

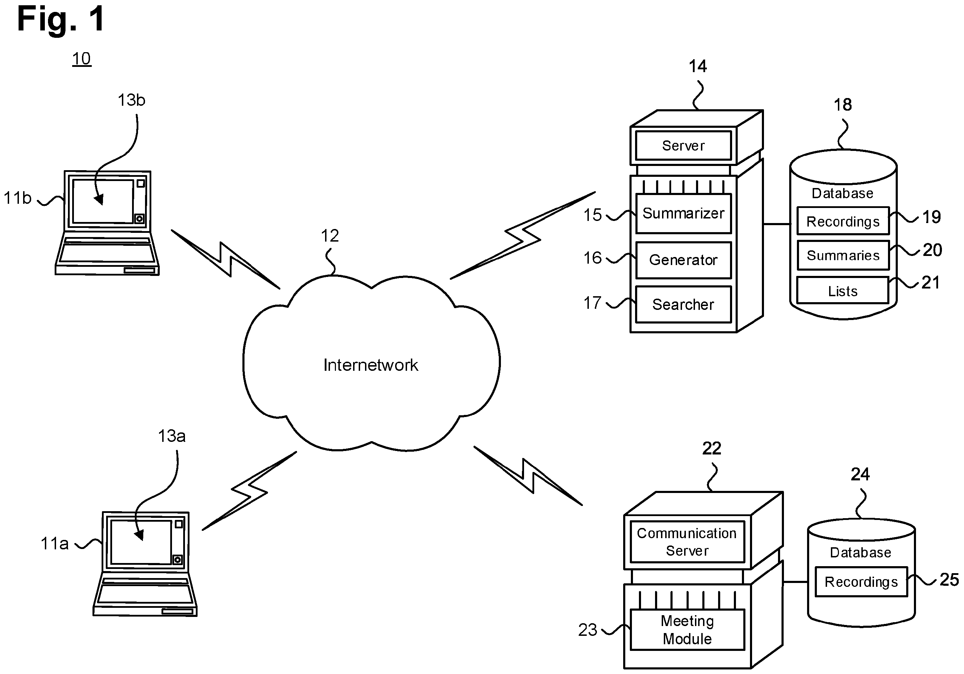

Providing a digital assistant that automatically summarizes a meeting and generates action items is helpful for users and utilizes data from communication platforms that already exist. FIGURE 1 is a block diagram showing a system 10 for providing an artificial intelligence powered digital meeting assistant, in accordance with one embodiment. Two or more users can meet using an internet-based communication platform to communicate over an internetwork 12, such as the Internet, via a computing device 11a-b, such as a desktop, laptop, mobile phone, or tablet. The meeting can be facilitated via a webpage displayed on or an application 13a-b installed on the computing device 11a-b that communicates with a communication server 22. The communication server 22 includes a meeting module 23, which communicates with the webpage or application to provide communication features during the meeting.

A recording 25 of the meeting can be made and stored in a database 24 interconnected to the communication server 22. The recording can be processed to generate a summary of the meeting and a list of action items assigned during the meeting. A meeting server 14 can access the recording from the database 24 of the communication server 22 for storage and processing. The meeting server 14 include modules, such as a summarizer 15, action generator 16, and searcher 17. The summarizer 15 generates a summary 19 of the meeting based on the recording or a transcription of the audio recording, while the action generator 16 generates a list of action items 21 discussed or assigned during the meeting. The summary 20 and list 21 of action items are stored in a database 18 interconnected to the meeting server 14, along with the recording 19 from the communication server 22. The searcher 17 performs a search of the summary or list of action items based on a query provided by a participant of the meeting or another user. In one embodiment, the summary and list of action items are generated for each meeting conducted via the webpage or application 13a-b. In a further embodiment, the communication 22 and meeting 14 servers, as well as the databases 18, 24 can be cloud-based.

In one embodiment, each of the servers and computing devices can include a processor, such as a central processing unit (CPUs), graphics processing unit (GPU), or a mixture of CPUs and GPU, though other kinds of processors or a mixture of processors are possible. The modules can be implemented as a computer program or procedure written as source code in a conventional programming language and is presented for execution by the processors as object or byte code. Alternatively, the modules can also be implemented in hardware, either as integrated circuitry or burned into read-only memory components, and each of the computing devices and servers can act as a specialized computer. For instance, when the modules are implemented as hardware, that particular hardware is specialized to perform the computations and communication described above and other computers cannot be used. Additionally, when the modules are burned into read-only memory components, the computer storing the read-only memory becomes specialized to perform the operations described above that other computers cannot. The various implementations of the source code and object and byte codes can be held on a computer-readable storage medium, such as a floppy disk, hard drive, digital video disk (DVD), random access memory (RAM), read-only memory (ROM) and similar storage mediums. Other types of modules and module functions are possible, as well as other physical hardware components.

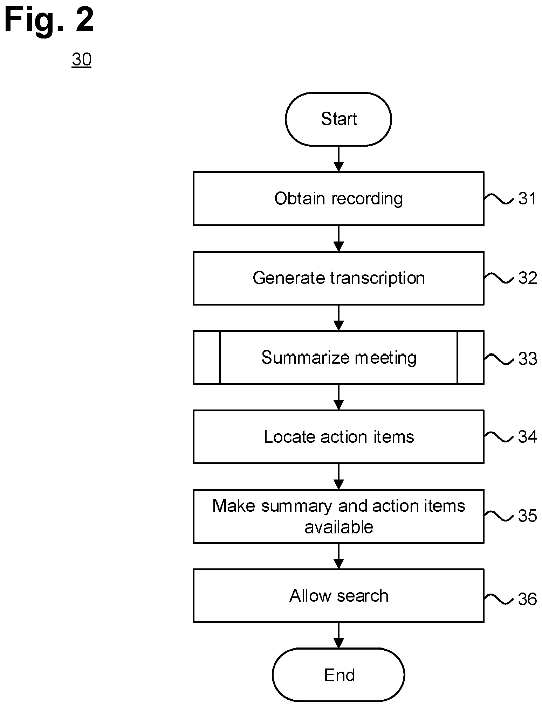

Once generated, the summary and action items can be provided to one or more participants of the meeting via a link, as a document, or as text in a message, such as an email or text. FIGURE 2 is a flow diagram showing a method 30 for providing an artificial intelligence powered digital meeting assistant, in accordance with one embodiment. A video or audio recording of a meeting is obtained (step 31) and a transcription of the recording can be optionally generated (step 32). A summary of the meeting is generated (step 33) based on the transcription and a list of action items are identified (step 34). The summary and action items can be made available (step 35) to one or more participants of the meeting via the internet-based communication platform or accessed via a link or attachment in an email or text message. The summary and action items can be made searchable (step 36) to allow a user to identify a particular task to be completed or recall particular topics of the meeting.

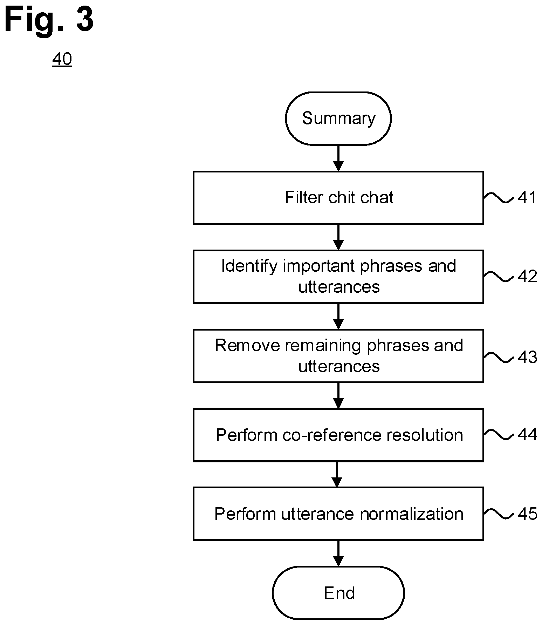

The summary can provide a meeting participant or individual that was unable to attend the meeting with notes regarding salient topics discussed. FIGURE 3 is a flow diagram showing, by way of example, a method 40 for generating a meeting summary. Each meeting generally includes three different types of communication, including chit-chat, enquiries or assignments, and updates. Chit-chat includes basic etiquette or debate regarding a topic, while an enquiry or assignment covers the assignment of a task or update regarding a task, while an update includes new events or developments with respect to a task or topic. Conversational data of the recording or transcription of the recording is reviewed to identify chit-chat communication during the meeting, which is filtered (step 41) from the recording or transcription. The chit-chat and other informative utterances are extracted using custom algorithms. Meanwhile, summarizing the meeting can be based on a machine learning algorithm, which in one embodiment, can include different phases.

In a first phase, important phrases and utterances can be identified (step 42). An ensemble-based approach can be used to identify if an utterance is summary worthy or not. For example, models, such as BERT, Glove & Word2Vec, which is a deep learning model that creates contextual vectorization of every utterance, can be used to make the decision of inclusion. Additionally, LexRank or TextRank are graph-based importance ranking algorithms and can also be used to determine which phrases or utterances should be utilized in the summary. Those phrases or utterance determined as not summary worthy can be removed (step 43).

Subsequently, co-reference resolution can be performed (step 44) as a second phase. During a conversation, a concept or a speaker is often only explicitly mentioned once during the initiation, after which they are referred by their pronoun form. Such pronoun utterance extraction out of context does not make much sense. Hence, each pronoun to be resolved to their proper noun form, to make complete sense, which can be accomplished using heuristic rules and machine learning algorithms. Knowing and understanding who is speaking is important to determine statements, views, and opinions made by each participant.

In a third phase, utterance normalization can be performed (step 45). The dialog during a meeting is often in active form, which is not that useful in an overview or summarization setting. A conversion from active to passive has to be performed to make presentable as a summary. The conversion is performed using a combination of deep learning model and classical NLP technique called AMR (Abstract Meaning Representation). A model first encodes the text of the transcription into a graph form to extract the "core meaning" from an utterance and removing all surface level syntactic variation. After which, the text is decoded back to natural language form, the decoder being biased to create passive sentences from the utterance graph.

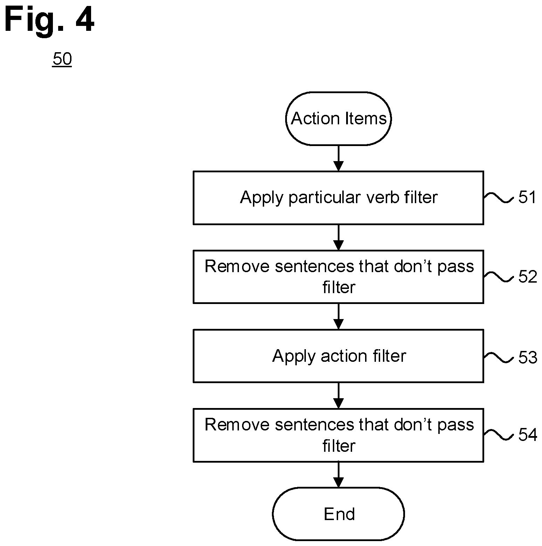

Along with the summary, the list of action items helps place important information from a meeting directly in front of the participants. Specifically, extracting action items from the conversational data with a designation of Assigner and Assignee facilitates completion of the action items by providing the Assignee a list of tasks to be performed. FIGURE 4 is a flow diagram showing, by way of example, a method 50 for generating a list of action items. Pre-trained models of well-established open-source libraries, such as Stanza, BERT, as well as other libraries, can be utilized to overcome the hurdle of low volume of data available. In-depth research was carried out to understand the grammatical patterns of the English language, which can help the machine to identify the important items and action items from the meeting transcription data. Salient items and insights can be extracted from conversational data via artificial intelligence.

Specifically, Parts of Speech tags can be used to extract the action items from the conversational data, as described below. For example, multiple levels of rules and filters which have been derived by analyzing the data and language, can be used to identify and extract the action items. The extracted items can help the readers in understanding the crux of the meeting even if they were absent in the meeting. Furthermore, the extracted action items, would serve as an assistant to remind assigners and assignees of tasks about the discussed tasks in the meeting.

Pre-trained Machine Learning models and filtering using an AI powered solution can be performed. A rule based system for extracting the action items which can be derived after analyzing a significant amount of data can use different filters. A particular verb filter can be applied (step 51) and sentences in the transcript or recording that do not pass the filter can be removed (step 52). For example, only those sentences would be able to pass the verb filter in which modal auxiliary verb (MD) or present form of verb (VB) are present and the MD auxiliary verb is followed by the VB verb in the sentence. Modal verbs are generally used to show if something is believed to be certain, possible or impossible. Modal verbs can also be used to talk about ability, ask permission and make requests & offers. Verb form can also be helpful in identifying tasks for action times since most tasks assignment are frequently in present or future tense.

A second, action filter can also be applied (step 53) to the transcript of the recording simultaneously with or after the verb filter has been applied. The verb filter may allow unnecessary items in the output. For example, if someone is asking for some kind of permission or any type of request, the sentence would pass the verb filter, but still should not be included as an action item to be identified. These types of sentences can be filtered out using 2 types of filters. For instance, if a Modal verb is followed immediately by a Noun or Pronoun, the sentence would most probably be a question and can be filtered out. Second, if a past participle form of modal verb e.g., "should", "would" is not getting followed by "be", then they are also filtered out e.g. sentences containing only "should" would be filtered out but sentences containing "should be" would not be filtered out.

The assignor and assignee of a task can be determined to identify the individual assigning the task and the individual assigned the task for accountability purposes. Further, if questions arise regarding the task, the identity of the assignor and assignee are helpful for follow up.

Providing users with a meeting summary allows all meeting participants to become appraised of important points discussed without listening to the entire meeting in an automated fashion by intelligently extracting a succinct summary of both long and short meetings. Automated task creation using structured data extracted from meeting data promotes efficient project and task management, as well as completion. As this textual summary is stored in a database, text-based searching algorithms can be used to perform intelligent search. Making all the meeting summary and lists of action items searchable by participants, bring value to everyone.

The digital assistant can also perform additional features with respect to the meeting via the internet-based communication platform, including searching a set of documents associated with the meeting.

While the invention has been particularly shown and described as referenced to the embodiments thereof, those skilled in the art will understand that the foregoing and other changes in form and detail may be made therein without departing from the spirit and scope of the invention.

## Claims

1. A computer-implemented system (10) for providing an artificial intelligence powered digital meeting assistant, comprising:
a database (24) to store a recording (25) of conversational data from a meeting facilitated via an internet-based communication platform; and
a server (14) comprising a central processing unit, memory, an input port to receive the recording (25) from the database, and an output port, wherein the central processing unit is configured to:
transcribe (32) the conversational data from the recording (25);
generate (33) a summary of the meeting based on the conversational data;
generate (34) a list of action items to be performed by one or more participants of the meeting based on the conversational data;
provide (35) the summary and list of action items to the participants.

2. A system (10) according to Claim 1, wherein the central processing unit receives a search query from one of the participants and conducts a search of at least one of the summary and the list of action items.

3. A system (10) according to Claim 2, wherein the central processing unit identifies at least a portion of the summary or list of action items that satisfies the search query and provides the portion to the participant.

4. A system (10) according to Claim 1, wherein the summary is generated, comprising at least one of:
filtering (41) chit chat from the conversational data;
identifying (42) phrases important to topics of the conversational data;
performing (44) co-reference resolution; and
performing (45) utterance normalization.

5. A system (10) according to Claim 4, wherein the utterance normalization is performed by converting the conversational data from active to passive tense and the co-reference resolution is performed by assigning the participants as speakers of the conversational text.

6. A system (10) according to Claim 1, wherein the list of action items is generated, comprising:
applying (51) one or more verb filters to the conversational data;
removing (52) conversational data that doesn't pass the applied verb filters;
applying (53) one or more action filters; and
removing (54) conversational data that doesn't pass the applied action filters.

7. A system (10) according to Claim 6, further comprising:
providing the remaining conversational data as the list of action items.

8. A computer-implemented method (30) for providing an artificial intelligence powered digital meeting assistant, comprising:
obtaining (31) a recording (25) of conversational data from a meeting facilitated via an internet-based communication platform;
transcribing (32) the conversational data from the recording (25);
generating (33) a summary of the meeting based on the conversational data;
generating (34) a list of action items to be performed by one or more participants of the meeting based on the conversational data;
providing (35) the summary and list of action items to the participants.

9. A method (30) according to Claim 8, further comprising:
receiving a search query from one of the participants; and
conducting a search of at least one of the summary and list of action items.

10. A method (30) according to Claim 9, further comprising:
identifying at least a portion of the summary or list of action items that satisfies the search query; and
providing the portion to the participant.

11. A method (30) according to Claim 8, wherein the summary is generated, comprising at least one of:
filtering (41) chit chat from the conversational data;
identifying (42) phrases important to topics of the conversational data;
performing (44) co-reference resolution; and
performing (45) utterance normalization.

12. A method (30) according to Claim 11, wherein the utterance normalization is performed by converting the conversational data from active to passive tense.

13. A method (30) according to Claim 11, wherein the co-reference resolution is performed by assigning the participants as speakers of the conversational text.

14. A method (30) according to Claim 8, wherein the list of action items is generated, comprising:
applying (51) one or more verb filters to the conversational data;
removing (52) conversational data that doesn't pass the applied verb filters;
applying (53) one or more action filters; and
removing (54) conversational data that doesn't pass the applied action filters.

15. A method (30) according to Claim 14, further comprising: providing the remaining conversational data as the list of action items.
